# EUROPEAN PATENT APPLICATION

(11) **EP 4 089 588 A1**
(43) Date of publication of application: **16.11.2022**
(21) Application number: 21173227.6
(22) Date of filing: 11.05.2021
(51) Int. Cl.: G06N 3/08, G06N 3/04, B60W 40/00

(54) **METHOD FOR AUTOMATICALLY EXECUTING A VEHICLE FUNCTION, METHOD FOR ADVERSARIAL DEFENSE AGAINST AND/OR DETECTION OF ADVERSARIAL ATTACKS AND DEFENSE UNIT FOR A VEHICLE**

(71) Applicant: Volkswagen Aktiengesellschaft, 38440 Wolfsburg (DE)
(72) Inventor: Kapoor, Nikhil, 38440 Wolfsburg (DE); Sass, René, 38518 Gifhorn (DE)

(57) **Abstract**

Method for automatically executing a vehicle function of a, in particular at least partially autonomously controlled, vehicle (1) based on spatially resolved raw sensor data (I) for environment perception generated by at least one sensor device (22, 24, 26) for environment detection of the vehicle (1), including:
- receiving spatially resolved raw sensor data generated by the at least one sensor device (22, 24, 26) of the vehicle (1);
- processing sensor data which are characteristic for the spatially resolved raw sensor data (I) by a defense unit (30), the defense unit (30) determining at least one adversarial perturbation parameter being characteristic for an adversarial perturbation of the sensor data, wherein for the determination of the adversarial perturbation parameter the sensor data are transformed from a spatial domain representation (*x^{adv}*) into a frequency domain representation (*X^{adv}*);
- executing the vehicle function based on the at least one adversarial perturbation parameter.

## Description

The present invention relates to a method for automatically executing a automatically executing a vehicle function of a, in particular at least partially autonomously controlled, vehicle based on spatially resolved raw sensor data for environment perception generated by at least one sensor device for environment detection of the vehicle. The present invention also relates to a method for adversarial defense against and/or detection of adversarial attacks on spatially resolved raw sensor data for environment perception generated by at least one sensor device for environment detection of a vehicle, and a defense unit for a vehicle.

Machine learning has great potential for modern driver assistance systems and automated driving. Functions based on deep neural networks process raw sensor data (e.g. from cameras, radar, lidar) in order to derive relevant information. These are e.g. type and position of objects in vehicle environment, their behaviour, or lane geometries and topologies. Among these types of networks, convolutional neural networks in particular have proven to be particularly suitable for image processing. An essential feature in the development of deep neural networks (more precisely: in the training process) lies in the purely data-driven parameter fitting without expert intervention: Here, the deviation of the output (for a given parameterization) of a neural network from a ground truth is measured (the so-called Loss). The loss function used here is selected in such a way that the parameters depend on it in a differentiable manner. As part of the optimization process, the parameters of the neural network are adapted in each training step depending on the derivative of the loss (determined on several examples) such that the loss is minimized. These training steps are repeated often until the loss no longer decreases. With this common procedure, the model parameters are determined without expert assessment or semantically motivated modelling. This has significant consequences for the properties of the neural network:
Firstly, deep neural networks are largely non-transparent for humans and their calculations cannot be interpreted. This is a massive limitation for systematic testing or formal verification. Secondly, deep neural networks are susceptible to harmful interference (adversarial perturbations): small manipulations of the input data that are barely perceptible to humans or that do not change the assessment of the situation can lead to completely different output data Such manipulations can be deliberately induced changes in the data ("neural hacking") as well as random changes in the image (sensor noise, weather conditions, certain colors or contrasts). These adversarial perturbations need to be countered in the real-world by building reliable defense methods that can minimize the misclassifications at the end.

Thirdly, it is unclear which input characteristics an algorithm sensitizes to. This ensures that synthetic data can be hardly used successfully for training neural networks: neural networks trained in simulation or on other synthetic data have a surprisingly poor performance on real sensor data. Application of neural networks in a different domain (training in summer, execution in winter, presence of augmentations, etc.) also reduces the functional quality, sometimes dramatically.

Currently, there exist a few approaches to counter the effect of adversarial attacks:
One approach is feature squeezing (see for instance: Xu et al., Feature Squeezing: Detecting Adversarial Examples in Deep Neural Networks, In: arXiv:1704.01155, 2017, https://arxiv.org/abs/1704.01155): These methods modify the input slightly using traditional computer vision techniques such as bit-depth reduction, non-local means smoothing, jpeg compression, median smoothing etc. that modify the input in small ways, thereby hoping to remove the adversarial perturbations in return.

Most of these techniques are too naive, and do not work under stronger attacks. The improvements gained are also marginal and often limited to hyper-parameter configuration which limits its practical usability.

Another approach is (known as) MagNet (see for instance: Meng et al., MagNet: a Two-Pronged Defense against Adversarial Examples, In: arXiv:1705.09064, 2017, https://arxiv.org/abs/1705.09064): They use an Autoencoder (AE) to distinguish between a clean and adversarial example by thresholding the reconstruction error based on the AE output. If the threshold is not exceeded, the AE input is fed directly to the target DNN.

A detector based on another neural network is not solving the underlying problem as an attacker can simply attack the detector in addition to the underlying neural network and fool them both as a joint optimization problem.

A further approach is known as DAPAS (see for instance: Cho et al., DAPAS: Denoising Autoencoder to Prevent Adversarial attack in Semantic Segmentation, In: arXiv:1908.05195, 2019, https://arxiv.org/abs/1908.05195): An Autoencoder is trained in the spatial domain to denoise adversarial images before being fed in to the target DNN.

Using an Autoencoder for denoising in the spatial domain incurs additional computational cost affecting real-time inference performance when combined with the target DNN. Since the training of the Autoencoder is based on traditional noise sources, such as Gaussian/Uniform/Bimodal noise, it is unclear if this approach will generalize to many complex adversarial attacks such as PGD, C&W, and DeepFool.

A further approach is given by Adversarial Training: Here adversarial images are generated during the training process and the images are then further added to the training set, such that the DNN learns smoother decision boundaries, and hence can be expected to be more robust towards the computed attacks.

Adversarial Training is computationally very expensive and the gains are only limited to the attack type that it was trained on.

Coming up with reliable and effective adversarial defense method that works across a range of noise types and strength is still considered an unsolved problem. Such a defense module offers many practical applications in terms of improving safety and security of perception functions for highly automated driving. Although adversarial defenses are currently focused a lot in research, most of the current solutions do not scale to unseen attacks and their proposed improvements are only marginal when compared to a complex real-world task such as semantic segmentation.

It is therefore the objective of the invention to provide a method for automatically executing a vehicle function of a vehicle based on spatially resolved sensor data for environment perception solution and a defense unit for a vehicle as well as a method for adversarial defense and/or detection of adversarial attacks on spatially resolved (raw) sensor data which may allow a reliable and effective adversarial defense method that works across a range of noise types. The afore-mentioned problems are eliminated by the subject-matter according to the independent claims. Advantageous embodiments and further developments form the subject matter of the sub-claims.

A method for, in particular automatically, executing a vehicle function of a, in particular at least partially autonomously controlled, vehicle based on spatially resolved raw sensor data for environment perception generated by at least one sensor device for environment detection of the vehicle, includes receiving spatially resolved raw sensor data, in particular generated (in particular recorded) by the at least one sensor device of the vehicle.

The method further includes processing (spatially resolved) sensor data which are characteristic for the spatially resolved raw sensor data by a defense unit (of the vehicle), the defense unit (processing sensor data by) determining at least one adversarial perturbation parameter being characteristic for an adversarial perturbation of the (spatially resolved) sensor data. For the determination of the adversarial perturbation parameter, the (spatially resolved) sensor data are transformed (in particular converted) from a spatial domain representation into a frequency domain representation.

Preferably, the method further includes determining defense output sensor data in dependence of the at least one adversarial perturbation parameter (via performing a computer-implemented method step), in particular by at least reducing and/or removing the at least one adversarial perturbation (via performing a computer-implemented method step).

It is conceivable that the adversarial perturbation parameter is chosen to be an (adversarial) perturbation strength and/or a parameter being characteristic for an (adversarial) perturbation strength.

Preferably, the method includes outputting the defense output sensor data and/or providing the defense output sensor data for output and/or transmission to a target perception unit for performing a perception task based on the defense output sensor data and/or a control unit (of the vehicle) for executing the vehicle function (and/or for initiating to execute the vehicle function).

Preferably, the method includes executing the vehicle function (by the control unit of the vehicle) based on the at least one adversarial perturbation parameter, in particular based on the defense output sensor data.

Preferably, the method is used for defending against adversarial attacks and/or detecting adversarial attacks (in particular on the (raw) sensor data), in particular by determining at least one adversarial perturbation parameter in the frequency domain.

The method proposed by the present invention offers the advantage that by the determination of the at least one adversarial perturbation parameter and in particular by the determination of the defense output sensor data in the frequency domain (based on the sensor data in frequency domain representation) the sensor data (for instance an image captured by a camera of the vehicle) can be downsampled a lot severely in the frequency domain than in the spatial domain, as the RGB domain, without corresponding loss in performance. This is mainly due to a reduction in model architecture (and hence the corresponding floating-point operations) that is needed to incorporate the frequency transformed sensor data (for instance images).

The method offers the additional advantage that the defense output sensor data in the frequency domain can be of a much smaller resolution when compared to its spatial domain counterpart, leading to faster training, reduced model architecture, and even faster inference.

The approach processing the sensor data in frequency domain and hereby determining the at least one adversarial perturbation parameter and/or based on this determining defense output sensor data is a major difference from DAPAS mentioned in the introductory part of the present invention. As it was found, the determination of the at least one adversarial perturbation parameter based on the sensor data in frequency domain representation offers the advantage that it is especially well adapted to identify and split adversarial attacks manifesting as adversarial perturbations in the sensor data, in particular adversarial attacks and/or perturbations generated by artificial neural networks.

It was found that the features being characteristic of adversarial perturbations compared to non-perturbed sensor data are more prominent and even amplify in frequency domain which makes them easier to identify and/or to address. Advantageously, this in turn directly improves the safety of the method for executing a vehicle function and/or the method for defending against adversarial attacks and/or detecting adversarial attacks.

By applying this method proposed in the present invention, advantageously the robustness of various perception tasks, for instance computer-vision tasks, with respect to adversarial attacks may be increased.

Furthermore, the proposed method offers the advantage that it is task-, model- and attack-agnostic, as it does not care where the defense output sensor data, as for instance the output denoised image, is fed into.

The sensor data may be identical to the spatially resolved raw sensor data. Preferably, the sensor data are, in particular spatially resolved, sensor data, which are derived from the spatially resolved raw sensor data by preprocessing the spatially resolved raw sensor data (via a computer-implemented method step).

The (computer-implemented) preprocessing (method) step may include resizing (to a preset input size, for instance for a neural network, in particular while keeping the aspect ratio constant) and/or normalizing the (raw) sensor data (e.g. subtracting a measurement value mean of the entire (raw) sensor data from the raw sensor data) and/or division by a standard deviation and/or flipping and/or cropping the (spatially resolved) raw sensor data and/or sensor data. Such preprocessing steps allow a faster and more stable evaluation of the data. For instance, the (spatially resolved) raw sensor data and/or the sensor data are preprocessed in a computer-implemented data preprocessing step such that the data are in an appropriate input format for a subsequent sensor data processing step as determining the at least one adversarial perturbation parameter (in particular such that the data are in an appropriate input format for a neural network). For instance, a camera image may be cropped to remove unwanted image regions, e.g. the bonnet of the ego vehicle if visible in the camera image.

In particular, the spatially resolved raw sensor data (or sensor data) are transferred from the (at least one) sensor device to the defense unit. Preferably, the defense unit receives the raw sensor data and/or the sensor data which are characteristic of the spatially resolved raw sensor data.

As an adversarial perturbation in particular a (well-designed and in particular unintentional) perturbation of sensor data, as for instance raw sensor data, in particular carried out and/or initiated by a (non-authorized) Third Party is understood, which typically is hard to detect via human eyes. So humans can still understand the objects correctly, but deep neural networks can produce different results (for instance in perception tasks) than what is expected. For instance, the effect of an adversarial perturbation of sensor data, for instance a change of an image, may be that the deep neural network misclassifies the sensor data, as for instance the image, as a wrong target.

The expression "reducing at least one adversarial perturbation" in particular is to be understood as lower the effect of the adversarial perturbation and/or the adversarial noise. In particular reducing at least one adversarial perturbation makes the sensor data with the reduced adversarial perturbation less vulnerable for being misinterpreted in a subsequent perception task (based on an artificial neural network), for instance for being misclassified.

Preferably, by removing the at least one adversarial perturbation and in particular by removing all adversarial perturbations the original (in particular non-attacked) sensor data (and/or sensor data prior to being attacked) are restored essentially.

Preferably, for reducing and/or removing the at least one adversarial perturbation the sensor data are (processed and/or) modified based on the at least one adversarial perturbation parameter.

In a preferred embodiment, the sensor data are transformed to a Discrete Cosine Transform (DCT) representation and/or a Fast Fourier Transform (FFT) representation. Applying a discrete cosine transformation and/or a Fast Fourier Transformation advantageously helps to separate the sensor data into components (or spectral sub-bands) of differing importance with respect to the adversarial perturbations. This allows to provide a robust, accurate and effective defense method against adversarial attacks.

The advantage of using a DCT transform (in particular instead of a spatial domain as the RGB domain of RGB images) is two-folds (and is explained with respect to RGB images):

Firstly, the image can be downsampled a lot severely in the DCT domain than in the RGB domain without corresponding loss in performance. This is mainly due to a reduction in model architecture (and hence the corresponding floating-point operations) that is needed to incorporate the DCT transformed images. The input resolution in the DCT domain is usually H/8xW/8xC, in comparison to HxWx3 for RGB images, where H, W represent the height, and width of an image, and C represents the number of channels, depending on an channel selection method used (in particular see afterwards). In order to feed the lower dimensional DCT image to a DNN (deep neural network), fewer convolutional layers are needed in the architecture compared to the RGB images based architecture, and hence result in a boost in training and inference time.

Secondly, the DCT domain incurs additional defense characteristics since high-frequency information can be removed during down-sampling using a technique called channel selection. It is often understood that adversarial perturbations correspond to high-frequency noise, and hence a suppression of high-frequency noise due to the DCT conversion might help further lower the effect of adversarial noise.

In a further preferred embodiment, the method includes accessing a, in particular trained machine-learning, denoising model for performing at least one computer-implemented denoising operation on the sensor data in the frequency domain, wherein in particular the denoising model includes a set of parameters set to values learned as a result of a training process in the frequency domain. Preferably, the denoising model and/or the denoising operation(s) is/are performed by a denoising unit (of the defense unit). Preferably, the denoising operation effects denoising at least one perturbation of (perturbed) sensor data (and thus at least reducing the at least one adversarial perturbation).

In particular the denoising model is based on an artificial neural network, which preferably is trained with training (sensor) data in the frequency representation. In contrast to prior art the defense unit operates not in the spatial domain but in the frequency representation. This advantageously allows adversarial perturbations to be identified and defended (and/or cured) with increased robustness and with less computational efforts.

In a further preferred embodiment, for (performing) the (computer-implemented) denoising operation (in particular in the frequency domain, for instance the DCT domain), an autoencoder and/or a GAN (Generative Adversarial Networks) and/or a variational autoencoder and/or a vector quantized VAE (VAE: variational autoencoder) and/or a hierarchical VAE, and/or a different encoder-decoder model is used. Preferably, an Autoencoder-based (neural) network is used for denoising sensor data and/or removing and/or reducing at least one adversarial perturbation from sensor data.

The output denoised sensor data (the defense output sensor data) advantageously can be used as an input to any model (segmentation, classification or detection).

Preferably, the method is used as an attack detector by thresholding the reconstruction error of the trained denoising model, in particular the trained Autoencoder. Preferably, for given (pre-processed) sensor data the reconstruction error of the trained denoising model, in particular the trained Autoencoder, is determined and/or calculated (via computer-implemented method steps) and an attack parameter is determined based on the reconstruction error (via a computer-implemented method step). For that, at least one threshold value may be preset which may be fixed and/or be variable. Preferably, this threshold value is derived and/or set in dependence of a training process of the denoising model, in particular the Autoencoder, wherein the training process is preferably performed in the frequency domain.

In a further preferred embodiment, the sensor data are processed via at least one computer-implemented random pre-processing method step, in particular prior to being transformed into frequency domain. Preferably, at least one random transformation step and particularly preferably different random transformation steps are added in the input pre-processing pipeline and/or the pre-processing method step in particular prior to the transformation of the sensor data to frequency domain.

The randomization (in particular via performing the at least one random pre-processing method step, a conversion of the sensor data from spatial domain to frequency domain and denoising the (randomized) sensor data using a trained Autoencoder in the frequency domain advantageously is, as was found in the present invention, an efficient methodology of reaching a real-world feasible adversarial defense methodology of reaching at a real-world feasible adversarial defense method.

In a further preferred embodiment, the random pre-processing method step includes an addition of random noise at least to parts of the sensor data. In particular this is done to move the adversarial perturbed sensor data (for instance the adversarial image) in random directions along the feature space and hence reduce its adversarial nature to some extent. The randomness also makes this defense harder to attack.

Preferably random noise sampled from a (given and/or preset) distribution (in a computer-implemented method step) is added to at least parts of the pixels of the sensor data and/or to each pixel of the corresponding sensor data in spatial representation, for instance to each pixel of the corresponding RGB image. The defense unit may (in particular randomly) select one distribution from a plurality of given and/or preset distributions (saved in a storage device) which is used to sample the random noise.

Preferably, the magnitude of the (random) noise which is added to the pixels of the sensor data is adapted to the pixel value(s) of the sensor data. As this random noise shall (essentially only) influence a potential adversarial attack and thus a potential adversarial perturbation of the sensor data it is preferable for the magnitude of the random noise to be limited to 0.07, preferably to 0.05, preferably to 0.04, preferably to 0.03, and particularly preferably to 0.02 of pixel level. Preferably, the addition of (random) noise changes at most 7%, preferably 5%, preferably 4%, preferably 3% and particularly preferably 2% of the original pixel value of the sensor data.

In particular, the complexity of the data input can be further increased by incorporating different techniques of including randomness and non-differentiability before the sensor data (in particular the image) is fed to the Autoencoder and/or the denoising unit. This is done to make the overall defense pipeline advantageously hard to attack in a pure white-box setting (given that an attacker is aware of the entire defense and has access to the model architecture and weights).

In a further preferred embodiment, a computer-implemented method step is included in which at least one channel parameter is determined based on the sensor data in frequency domain representation and in which a subset of sensor data is determined and/or selected based on the at least one channel parameter, wherein the adversarial perturbation parameter is determined (in particularly only) based on the determined and/or selected subset of sensor data. This selection of components and/or a subset of sensor data advantageously reduces computational efforts and the required communication band with for sensor data transfer.

Preferably, the (pre-processed and in particular the with the random pre-processing method step processed) sensor data are split into a plurality of blocks (of parts) of the sensor data (in the spatial domain). For example, an input image is split into 8x8 blocks. Preferably, the transformation from the spatial domain representation to frequency domain representation is applied on each block (of parts of) of the sensor data independently.

For the above-given example (with an image split into 8x8 blocks), applying the DCT transformation on each 8x8 block separately this results in 64 DCT coefficients for each 8x8 block of the HxWx3 RGB image (whereas H denotes the Height, W the width of the image). These 64 coefficients correspond to weightage of 64 base cosine-frequencies that are present in the original 8x8 RGB block images. The resulting image has dimensions of HxWx3 with each pixel indicating corresponding real-valued DCT coefficients. Next, these DCT coefficients are rearranged such that the same frequencies are all in one channel. The resulting image after this reshaping is therefor of resolution H/8xW/8x192. The 192 channels correspond to 64 frequencies x3 channels = 192 total channels.

Preferably, the frequency transformation coefficients (as for instance the DCT coefficients) obtained by transformation from the spatial domain representation to frequency domain representation of the plurality of blocks (of parts) of the sensor data are rearranged such that the same frequencies are all in one channel. In other words, preferably, the frequency transformation coefficients (as for instance the DCT coefficients) (of all blocks (of parts) of the sensor data) with the same frequency are packed and/or grouped as one channel.

Preferably, all components of the (pre-processed, in particular randomly-pre-processed) sensor data (in frequency domain representation) of the same frequency are grouped into one channel. Preferably, thereby a plurality of (frequency) channels are generated.

Preferably, the at least one channel parameter which is determined is characteristic for one (frequency) channel and particularly preferably each of the channel parameters of the plurality of channel parameters which is determined based on the sensor data is characteristic for one (frequency) channel, respectively.

In contrast to the use of prior art Autoencoders for denoising in the machine learning community, however, the present invention proposes a denoising model, in particular an Autoencoder, trained in the frequency representation DCT representation combined with channel selection for improving adversarial robustness.

Preferably, a (computer-implemented), in particular learning-based, channel selection method (step) is performed. This advantageously allows to identify and/or determine (by applying the channel selection method (step)) (frequency) channels comprising the most valuable and/or important and/or informative (semantic) data content with respect to the (non-perturbed) (raw) sensor data and/or the (frequency) channel with one of the most contribution of adversarial perturbation and/or adversarial noise. The channel selection method and/or the determination of the at least one and preferably the plurality of channel parameters allows to neglect at least one (frequency) channel which is associated (in particular at most and/or to a certain or preset amount) with adversarial noise and preferably (in particular all of) the (frequency) channel(s) which are associated (in particular at most and/or to a certain or preset amount) with adversarial noise.

Using dynamic channel selection, the channels (and correspondingly the frequencies) corresponding directly to the adversarial noise can be advantageously removed (and/or at least reduced) in particular in a learnt manner and/or based on at least one parameter set to values learned as a result of a training process (in particular of the denoising model, in particular of the Autoencoder), in particular based on a training sensor data set which is transformed to frequency representation for the and/or within the training process.

In a further preferred embodiment, the channel parameter is determined in a dynamic way including accessing a trained machine-learning channel selection model for selecting at least one (frequency) channel (in particular being characteristic for components of the sensor data of same frequency), wherein the channel selection model includes a set of parameters set to values learned as a result of a training process, (in particular in the frequency domain). Preferably the channel selection model includes two parameters set to values learned as a result of a training process which is performed (at least in parts) in the frequency domain.

In a further preferred embodiment, the channel parameter and/or the (frequency) channel is determined in a static way. Preferably, the channel parameter is preset and/or saved in a memory device (of the vehicle and/or of the defense unit and/or accessible by the defense unit and/or the denoising unit). It is conceivable, that a database is provided in which (for instance in dependence on the sensor data and/or the type of sensor data and/or the type of sensor device which generated the sensor data and/or in dependence of the perception task to be performed based on the sensor data) channel parameters are saved and may be accessed.

Preferably, the channel parameter(s) and/or the (frequency) channel is/are determined based on the (in particular average) impactfulness of the (corresponding) (frequency) channel (for which the channel parameter is characteristic) in particular with respect to the (subsequent) perception task to be performed. For the determination of the impactfulness an experience value and/or average value may be used. The neglection of at least one and preferably of more (frequency) channels offers the advantage, that computational effort (in particular in the subsequent perception task computation operations) may be reduced.

Preferably the set of parameters included by the channel selection model are set to values learned as a result of a training process of the denoising model, in particular of the Autoencoder.

Preferably, the channel selection (method step) and/or the determination of the channel parameter is (additionally and/or alternatively) motivated by different goals. For instance, the (frequency) channel selection and/or the determination of the at least one channel parameter may be based on the reduction of computational efforts and/or data compression.

Preferably, an inverse frequency transformation from sensor data in the frequency domain representation back to spatial domain representation (for instance an inverse DCT (IDCT) and/or an inverse Fast Fourier Transformation (IFFT)) is performed (via a computer-implemented method step), in particular by the denoising unit and/or the defense unit.

Preferably, the inverse frequency transformation is based on the determined channel selection and/or the determined channel parameter(s). Preferably only those sensor data in frequency domain representation corresponding to the selected channels are transformed back to spatial domain representation. Preferably, parts of the sensor data in frequency domain representation are not transformed back to sensor data in spatial representation. These may be in particular associated with adversarial perturbations (or with a contribution of adversarial noise). Preferably, the denoise unit and/or the defense unit outputs defense output sensor data in particular in spatial representation which preferably do contain no information and/or content corresponding to the (frequency) channels not selected (in the channel selection method step).

Preferably, a reconstruction loss is calculated and/or determined based on the sensor data input to the defense unit (in particular before a random pre-processing method step) and based on, in particular compared to the defense output sensor data. Preferably, based on this reconstruction loss (in particular by comparing to at least one threshold value) it is determined (and in particular detected) (via a computer-implemented method step) whether an adversarial attack has occurred and/or whether the sensor data comprise an adversarial noise (contribution).

In a further preferred embodiment, the sensor data are compressed via at least one computer-implemented compression method step, in particular prior to being transformed into frequency domain. This offers the advantage to make the method harder to attack and further increase the robustness against adversarial attacks. Preferably, this compression method step is performed before the sensor data are transformed via a random transformation step and/or prior to a transformation of the sensor data from a spatial representation into a frequency representation.

Preferably, a data compression step in which the sensor data are processed by being compressed, for instance via a JPEG compression, in particular in the beginning to introduce quantization and Huffman encoding as a means of advantageously making the defense non-differentiable and hence harder to attack.

Preferably, the vehicle function is a function, in particular for a driver assistance system, including performing at least one (computer-implemented) perception task, in particular a computer vision task and/or detection task as 2D/3D object detection and/or semantic segmentation and/or Instance-Level segmentation, based on the, in particular, spatially resolved (raw) sensor data. In particular, the at least one (computer-implemented) perception task is performed and/or executed by a target perception unit (of the vehicle).

In other words, target input sensor data are transmitted to and/or fed into and/or input in the target perception unit (of the vehicle). The target perception unit is configured to process the target input sensor data, hereby determining at least one perception result parameter (and/or perception output data), which are characteristic for a result of performing the perception task based on the target input sensor data. Preferably, the target perception unit provides and/or outputs the at least one perception output parameter (and/or perception output data) and/or a signal being characteristic of the perception output parameter (and or the perception output data). Preferably the vehicle function is executed based on the at least one perception output parameter (and/or perception output data) and/or the signal being characteristic of the perception output parameter.

Thus, advantageously, it is proposed to have a defense unit and in particular a denoising unit, in particular based on a trained Autoencoder, that can remove incoming images of potential adversarial noise before being fed into the target perception unit, in particular the target DNN (deep neural network).

Advantageously, the proposed approach offers practical usage, since this can be incorporated directly as a pre-processing module before the target perception unit, in particular before a target DNN, in a real-world setting with little computational overhead.

Preferably, the determination which sensor data are used as target input sensor data for the target perception unit is based on a sensor data processing output (data) of the defense unit. Preferably, the determination which sensor data are used as target input sensor data for the target perception unit is based on the at least one adversarial perturbation parameter.

Preferably, the defense output sensor data (or data derived from these data and/or sensor data being characteristic for the defense output sensor data) are used as target input sensor data for the target perception unit. Preferably, defense output sensor data differ from the (spatially resolved) (raw) sensor data by at least one adversarial perturbation and preferably all (determined) adversarial perturbations being removed and/or reduced compared to the (raw) sensor data.

In a further preferred embodiment, the target input sensor data are processed by means of an artificial neural network (in particular by the target perception unit), the artificial (target) neural network being supplied with the target input sensor data as input variables and the (target) artificial neural network maps the input variables as a function of and/or in dependence of a parameterizable processing chain to output variables, wherein the output variables are characteristic for the result of the perception task to be performed by the target perception unit and/or at least one region of interest of the (target input) sensor data (as for instance an object) and at least one class for classifying the region of interest (for instance an object).

Preferably, the target perception unit and in particular the (target) neural network generates perception output data from which a driver assistance system of the vehicle derives relevant information for partially or fully automated driving.

Preferably, the (target) (artificial) neural network is designed as a deep artificial neural network, in particular in which the parameterizable processing chain has a plurality of processing layers. Preferably, the (target) (artificial) neural network is designed as a convolutional neural network (CNN) and/or a recurrent neural network (RNN). Preferably the (target) artificial neural network is trained using predetermined training data, the parameterizable processing chain being parameterized by the training.

Preferably, the input layer of the artificial neural network is supplied with the target input sensor data, for instance a (digital) image captured by a camera and processed by the defense unit, and wherein the output layer of the target artificial neural network provides a matrix of N-dimensional output vectors, each of the N-dimensional output vectors as a probability distribution with respect to one assignment to the N classes can be interpreted in particular for an (detected) object and/or a determined region of interest.

In particular the vehicle function is a control function of the, in particular at least partially autonomously and preferably (fully) autonomously controlled, vehicle. The vehicle function may be a function being (in particular automatically) executed (at least) as part of a driver assistance system of the vehicle.

The in particular spatially resolved (raw) sensor data may be generated (and/or recorded) by the sensor device while the vehicle is in moving. Preferably, the sensor device monitors surroundings of the vehicle and particularly preferably records sensor data for the detection of (movable and/or moving and/or stationary) objects (for instance obstacles, pedestrians, vehicles, side-walks, traffic participants, traffic lights, traffic signs, roadway markings, or the like), in particular the determination of the type and/or position of the objects in the vehicle environment, their behavior, and/or lane geometries and topologies, of the surroundings of the vehicle.

Preferably, the sensor data are generated by at least one sensor device (of the vehicle) selected from a group which comprises a camera, a radar sensor, a lidar sensor, a thermal sensor, and the like and combinations thereof. These sensor devices advantageously are presently used for environment perception (of the vehicle). Preferably, the sensor device is used for at least one computer vision task/method (of the vehicle), which preferably is based on a deep neural network.

Preferably, the (spatially resolved) sensor data comprise a multitude of pixels whereas preferably each of these contains at least an intensity information. For instance, the sensor data may be an (visible light) image captured by a camera. In particular the image comprises a multitude (usually thousands) of pixels which contain color and/or brightness and/or intensity information.
The vehicle function may be a function of a vehicle component of the vehicle, for instance a perception function for at least one driver assistance system. Preferably, the vehicle component is selected from a group comprising a system for (in particular automated and/or semi-automated) driving and/or controlling the vehicle, a driver assistance system, a computer vision system, a navigation system, a warning system, a damping system of the chassis and/or vehicle, a vehicle climate control system, an entertainment system, an infotainment system, an opening system of a vehicle window, a comfort system for increasing the driving comfort of an occupant, a locking system of a vehicle door and/or a vehicle window, a vehicle locking system, a roof removal mechanism, a sunroof mechanism, a vehicle safety system (for example, a brake system), and/or a windshield wiper mechanism, or the like, and combinations thereof.

The vehicle function may also be a (different and/or new) detection and/or computer vision task (of the vehicle) initiated based on the at least one adversarial perturbation parameter.

In particular, it is conceivable that the executing the vehicle function in dependence on the adversarial perturbation parameter results in that the vehicle function is not executed or control parameters for executing the vehicle function are modified before the vehicle function is executed. Preferably, executing the vehicle function in dependence on the adversarial perturbation parameter effects the vehicle function to be changed, activated, de-activated, stopped, paused and/or adjusted (e.g. via a change of a parameter with respect to the vehicle function, in particular based on the (determined) adversarial perturbation parameter).

Preferably, the spatially resolved raw sensor data are generated and/or recorded in a joint recording (and thus at the same time). It is conceivable that more recordings, in particular recorded by one sensor device and preferably recorded one after the other (in immediate succession), are used as raw sensor data.

The sensor device may be arranged on and/or in the vehicle. The sensor device may be arranged on an outer part of the vehicle.

Preferably, the vehicle (whose vehicle function is to be executed and/or which retrieves the defense output sensor data and/or the attack parameter) comprises the sensor device for environment detection of the vehicle, particularly preferred as a (in particular fixed) component of the vehicle.

It is conceivable that the sensor device for environment detection of the vehicle is the sensor device of a vehicle (and/or another object) which is different from the vehicle whose vehicle function is to be executed. For instance, it may be the sensor device of another vehicle which is in communication connection with the vehicle (e.g. via "Vehicle-to-Vehicle", V2V communication and/or "Vehicle-to-Infrastructure", V2I communication, and/or "Vehicle-to-X", V2X communication).

The present invention is further directed to a computer-implemented method, in particular for using artificial intelligence for adversarial defense against and/or detection of adversarial attacks on spatially resolved (raw) sensor data for environment perception generated by at least one sensor device for environment detection of a vehicle.

Preferably the computer-implemented method is used for constructing a machine-learning denoising model based on artificial neural networks for adversarial defense against and/or detection of adversarial attacks on spatial resolved (raw) sensor data generated by at least one sensor device for environment detection of a vehicle.

The method includes generating a (in particular at least one) training dataset of spatially resolved training sensor data capturing a vehicle environment, wherein the spatially resolved training sensor data are in spatial domain representation.

The method further includes training, based on the training dataset, a machine-learning denoising model that includes a set of trainable parameters wherein the machine-learning denoising model is configured for determining based on the training sensor data at least one adversarial perturbation parameter being characteristic for an adversarial perturbation of the training sensor data, wherein for the determination of the adversarial perturbation parameter the training sensor data are transformed from a spatial domain representation into a frequency domain representation.

Preferably, the at least one adversarial perturbation parameter that is determined by the machine-learning denoising model is characteristic of or instead of the at least one adversarial perturbation parameter defense output sensor data, which are generated and/or determined based on the training sensor data, are determined (and may be output by the machine-learning denoising model).

Preferably, the training of the machine-learning denoising model includes determining a value for (each of) the trainable parameters of the set of trainable parameters (in particular in each of the subsequent training steps), wherein these values (preferably the values of all trainable parameters) are determined based on the training sensor data in frequency domain.

Preferably, the denoising model is based on an Autoencoder and/or a GAN and/or a Variational Autoencoder.

Preferably, the denoising model is based on an (artificial) neural network which is designed as a deep artificial neural network, in particular in which the parameterizable processing chain has a plurality of processing layers. Preferably, the (artificial) neural network is designed as a convolutional neural network (CNN). Preferably the artificial neural network is trained using predetermined training datasets of spatially resolved training sensor data, the parameterizable processing chain being parameterized by the training.

Preferably, the input layer of the artificial neural network is supplied with the (spatially resolved) training sensor data in frequency domain representation and wherein preferably the output layer of the artificial neural network provides defense output sensor data or data characteristic for defense output sensor data in frequency domain representation.

Preferably, the machine-learning denoising model transforms the sensor data being characteristic for the training sensor data (for instance being derived from the training sensor data) from spatial domain representation in frequency domain representation before being input in the input layer of the artificial neural network. Preferably, the machine-learning denoising model transforms the defense output sensor data which are in frequency domain representation back into spatial domain representation.

Preferably, the machine-learning denoising model is configured, suitable and/or intended to carry out one or more of the method steps already described above in the context of the defense unit and/or the denoising unit in connection with the above-described method, in particular of the denoising model and/or channel selection model, individually or in combination with each other. Conversely, the method described above (the method for, in particular automatically, executing a vehicle function) may use the trained machine-learning denoising model.

Preferably, the machine-learning denoising model is configured to process the training sensor data in an analogous manner as was described above in the context of the pre-processing of (raw) sensor data.

In a preferred embodiment, attacked training sensor data are generated based on the (input) training sensor data by processing the training sensor data, preferably by adding a in particular pre-computed adversarial perturbation (in particular of the same dimension of the training sensor data). Preferably, essentially each pixel value of the (clean) training sensor data is modified by the (computer-implemented) conversion of the (clean) training sensor data to an attacked training sensor data (in particular by adding the adversarial perturbation).

This (adversarial) perturbation is preferably adversarial in nature such as computed from a strong attack such as a projected gradient descent (PGD) attack (see Madry et al: Towards Deep Learning Models Resistant to Adversarial Attacks: In arXiv:1706.06083v4, 2019; see https://arxiv.org/pdf/1706.06083.pdf) or simply a traditional noise source such as Gaussian/Uniform/Bimodal noise (as done by Cho et al.: DAPAS: Denoising Autoencoder to Prevent Adversarial attack in Semantic Segmentation, In: arxiv:1908.05195; https://arxiv.org/abs/1908.05195). For details of generating adversarial perturbation as a projected gradient descent (PGD) attack and/or Gaussian and/or Uniform and/or Bimodal noise as adversarial perturbation, these two references are hereby incorporated by reference.

In a preferred embodiment, the training sensor data are processed via at least one computer-implemented random pre-processing method step, in particular prior to being transformed into frequency domain. Preferably, (for additional details of the random pre-processing method steps see also above) a random noise is generated and/or pre-computed and added to the training sensor data. As random noise Gaussian and/or Uniform and/or Bimodal noise may be generated and/or used.

Preferably, for the random pre-processing method step, random noise is sampled from a distribution (for instance a Gaussian and/or Uniform and/or Bimodal distribution) and is added to each pixel of the training sensor data. This is in particular done to move the potentially attacked training sensor data in random directions along the feature space and hence reduce its adversarial nature to some extent. As described above, the randomness also makes this defense harder to attack.

Preferably, the set of (trainable parameters) is set to values learned as a result of the training process.

In a further preferred embodiment, the machine-learning denoising model is configured for determining, in particular selecting, at least one channel parameter being characteristic for components of the training sensor data of same frequency, wherein the at least one adversarial perturbation parameter depends on the at least one channel parameter. All of the method steps described above with respect to the sensor data may be preferably applied (as single method steps or in combination) (by the machine-learning denoising model) to the training sensor data and/or the attacked training sensor data.

Preferable, the machine-learning denoising model is trained for selecting at least one channel being characteristic for components of the sensor data of same frequency. Preferably the denoising model includes a set of parameters (preferably two parameters) which are characteristic of the at least one channel which is selected, whereas the set of parameters may be trained in the training process, wherein in the training process the values of these parameters are determined based on the (attacked and/or clean) training sensor data in frequency domain.

Preferably, the (machine-learning) denoising model is trained with a clean training data sets of (clean) training sensor data and with a attacked training data set of attacked training sensor data which are preferably generated based on the clean training sensor data as described above.

For example, as clean training dataset of clean sensor data for instance cityscapes datasets may be used, as for instance datasets described in M. Cordts, M. Omran, S. Ramos, T. Rehfeld, M. Enzweiler, R. Benenson, U. Franke, S. Roth, and B. Schiele, "The Cityscapes Dataset for Semantic Urban Scene Understanding," in Proc. of the IEEE Conference on Computer Vision and Pattern Recognition (CVPR), 2016. (see: https://www.cityscapes-dataset.com (cityscapes-dataset.com); https://www.cityscapes-dataset.com/wordpress/wp-content/papercite-data/pdf/cordts2016cityscapes.pdf). For details and as an example of training data of (clean) training sensor data (images) which may be used for training the denoising model and/or the Autoencoder, this reference is hereby incorporated by reference.

Preferably, the training result is verified by calculating a reconstruction loss. For this the standard reconstruction loss using the means squared error between clean sensor data and denoised sensor data (defense output sensor data) is preferably used. Preferably, additionally, a penalty loss term is added using a weighted parameter (lambda) that minimizes the number of channels needed and preferably hence maximum compression of the sensor data.

The present invention is directed to the use of this trained machine-learning denoising model, wherein (raw) sensor data are input and defense output sensor data are output by the machine-learning denoising model.

It is proposed to train the Autoencoder using a discrete cosine transform (DCT) representation directly instead of RGB images, in particular in combination with additional random pre-processing methods.

The proposed method, in particular the proposed training method, offers the advantage that it is agnostic to the target task, model, and also the underlying attack. The defense output sensor data (in particular the output denoised image) could be used as an input to any model (segmentation, classification or detection), any attack (since it is known that training with PGD attack generalizes to unseen attacks, and also with Gaussian Noise).

The method advantageously works well on clean images, since the Autoencoder is also specifically trained on clean images, such that clean images are barely affected.

The approach advantageously offers practical usage, since this can be incorporated directly as a pre-processing module before a target DNN in a real-world setting with little computational overhead. The training of the Autoencoder also is relatively inexpensive, as either only a single-attack type image or a single noise type is enough to generalize towards unseen new attacks.

The present invention is further directed to a defense unit for a vehicle for adversarial defense against and/or detection of adversarial attacks on spatially resolved raw sensor data for environment perception generated by at least one sensor device for environment detection of the vehicle, wherein the defense unit is configured to receive sensor data which are characteristic for the spatially resolved raw sensor data.

According to the invention the defense unit is configured to process the sensor data, hereby determining at least one adversarial perturbation parameter being characteristic for an adversarial perturbation of the sensor data, wherein for the determination of the adversarial perturbation parameter the sensor data are transformed (and/or converted) from a spatial domain representation into a frequency domain representation.

With the defense unit the present invention proposes a sensor data processing unit, which may be used as pre-processing unit of sensor data in particular prior to performing a (computer-implemented) perception task on the sensor data (in particular by means of a target perception unit), which offers the advantage to lead to an adversarial defense having favorable defense characteristics, such as high-quality denoising, memory efficient, harder to attack, and model and task-agnosticity.

Preferably, the defense unit is configured, suitable and/or intended to carry out one or more of the method steps already described above in the context of the defense unit in connection with the method, individually or in combination with each other. Conversely, the method may be provided with all features described in the context of the defense unit, individually or in combination with each other.

The defense unit in particular comprises a denoising unit (as described above in the context of the method), which is configured to in particular perform at least one denoising operation of the sensor data in a frequency domain of the sensor data.

Preferably, the defense unit is configured to pre-process the sensor data prior to converting the sensor data from a spatial representation into a frequency representation (in particular via DCT and/or FFT), in particular by performing at least one random operation to the sensor data. For example, random transformation steps may be applied to the sensor data and/or a random noise may be generated and added to the sensor data.

In particular the combination of randomization the sensor data, performing a frequency domain transformation and denoising the (randomized and/or pre-processed) sensor data utilizing a trained denoising module, in particular using a trained Autoencoder and/or a variational autoencoder (VAE) and/or a vector quantized VAE, and/or a hierarchical VAE, (in the frequency domain) is an efficient methodology of reaching at a real-world feasible adversarial defense method. Advantageously, the defense unit provides a defense approach which is agnostic to the target task, model and also the underlying attack.

Preferably, the defense unit is configured to provide and/or output at least one signal in dependence on the at least one adversarial perturbation parameter and/or the defense output sensor data. Preferably, this signal is transferred to a control unit of the vehicle, which is configured to execute at least one vehicle function in dependence on this signal.

Preferably, the defense unit comprises at least one processor executing the above-described method steps performed by the defense unit. Preferably, the denoising unit comprises at least one processor executing the above-described method steps performed by the denoising unit.

The present invention is further directed to a vehicle, in particular motor vehicle and/or designed for autonomous or partially autonomous controlled driving, comprising a defense unit for a vehicle according an embodiment described above. Preferably the defense unit is a fixed component of the vehicle.

It is also conceivable, that the defense unit is an external unit, which may be based on an external (backend) server (in particular of a OEM and/or a vehicle manufacturer or a service provider).

Preferably, the vehicle comprises a control unit (communicatively) connected to the defense unit and having at least one output for controlling at least one actuator of the vehicle, the control unit being configured to perform the control function as a function to execute a vehicle function in dependence of the at least one adversarial perturbation parameter and/or of the defense output sensor data determined by the defense unit, in particular by controlling the at least one actuator.

The vehicle may in particular be a (motorized) road vehicle. The vehicle may be a motor vehicle, which is in particular a motor vehicle controlled by the driver himself ("driver only"), a semi-autonomous, autonomous (for example, autonomy level 3 or 4 or 5 (of the SAE J3016 standard)) or self-driving motor vehicle. In this context, autonomy level 5 refers to fully automatic driving vehicles. Likewise, the vehicle may be a driverless transport system. The vehicle can be controlled by a driver or drive autonomously. Furthermore, in addition to a road vehicle, the vehicle may also be an air cab, an aircraft, and other means of transportation or another type of vehicle, such as an air, water, or rail vehicle.

The present invention is further directed to a computer program or computer program product comprising program means, in particular a program code, which represents or codes at least the method steps of each of the two methods according to the invention and preferably one of the described preferred embodiments and is designed for execution by a processor device.

The present invention is further directed to a data memory on which at least one embodiment of the computer program according to the invention or of a preferred embodiment of the computer program is stored.

The present invention of the method for automatically executing a vehicle function of a, in particular at least partially autonomously controlled, vehicle based on spatially resolved raw sensor data for environment perception and/or for defense against and/or detection of adversarial attacks has been described in the context of a vehicle. However, the present invention is also applicable to any methods and applications or devices or systems, in particular for security-critical and safety-critical applications such as automated driving, bio-medical disease detections and the like, as well as methods and/or systems, which include, in particular Al-based, perception modules, such as any autonomous system, and/or perception functions. The applicant reserves the right to claim a method and defense unit directed thereto as well. Further advantages, objectives and features of the present invention will be described, by way of example only, in the following description with reference to the appended figures. In the figures, like components in different embodiments can exhibit the same reference symbols.

The figures show:
Fig. 1 a schematic view of a vehicle comprising an evaluation unit according to an embodiment of the invention; and
Fig. 2 a block diagram illustrating an embodiment of the method proposed by the invention.

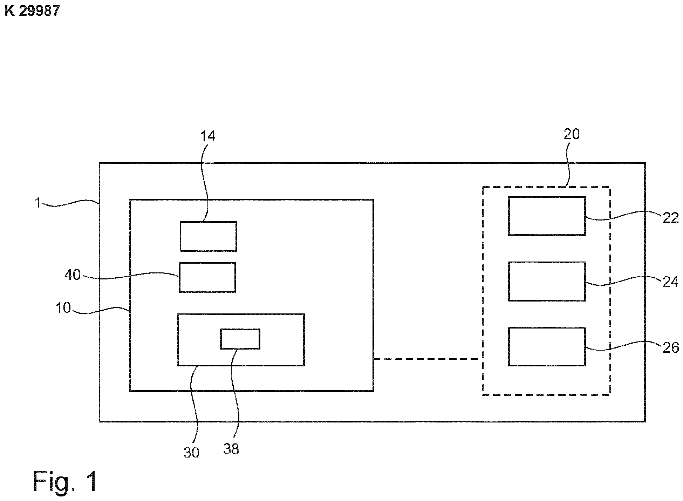

Fig. 1 shows a schematic view of a vehicle 1 whereas the vehicle 1 here comprises three different sensor devices 22, 24, 26, each of them preferably being part of an environment perception system 20 of the vehicle 1. One of these sensor devices may be for instance a camera capturing a (digital) image (in particular of the vehicle environment).

These generated spatially resolved raw sensor data (here the captured image) are supplied to a processing unit 10 processing these (raw) sensor data and/or to a denoising unit (or denoising module) 30 (which may be part of the processing unit 10 or which may be executed by the processing unit 10 comprising at least one processor). The defense unit 30 comprises a denoising unit 38 for denoising the sensor data (which are preferably pre-processed (raw) sensor data).

The defense unit 30 outputs defense output sensor data, here a denoised image DI, which are/is supplied as target input sensor data, here as target input image, with the target perception unit 40. The target perception unit performs a perception task based on the target input image (in general based on the target input sensor data) as for instance generating a segmentation mask SI.

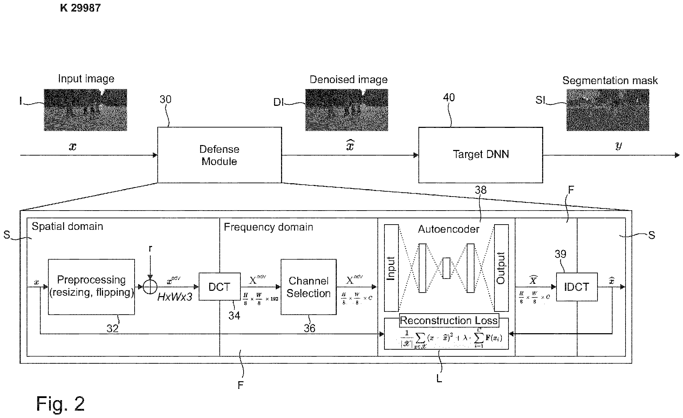

Fig. 2 shows a block diagram illustrating an embodiment of the method proposed by the invention. The defense unit (defense module) 30 (which also may be viewed as a denoising module) preferably operates on all input images I (attacked or not) before it is fed (maybe in a processed manner as defense output sensor data, here as denoised image DI) into the target segmentation model, which is here performed based on a target DNN (deep neural network) (performed by a target perception unit 40 via computer-implemented method steps).

The defense unit (defense module) 30 and/or the denoising unit 38 comprises and preferably consists of an Autoencoder (AE) that is trained on DCT coefficients of corresponding RGB images. The detailed explanation of the defense is presented as follows:
Step 1: Training of Autoencoder:
   a) Input pre-processing: An input camera RGB image I is first pre-processed using spatial resizing and center-cropping to a size of HxWx3, where H and W represent the height and width correspondingly. This clean image is then converted to an attacked image by adding a pre-computed adversarial perturbation r of the same dimension HxWx3. This perturbation may be adversarial in nature such as computed from a strong attack such as a projected gradient descent (PGD) attack (see for instance, https://arxiv.org/pdf/1706.06083.pdf) or simply a traditional noise source such as Gaussian/Uniform/Bimodal noise (as done by https://arxiv.org/abs/1908.05195).
      1) Noise addition: Random noise r sampled from a distribution is added to each pixel of the corresponding RGB image. This is done to move the adversarial image in random directions along the feature space and hence reduce its adversarial nature to some extent. The randomness also makes this defense harder to attack.
      2) DCT conversion (see reference sign 34), in particular from sensor data in spatial domain S representation to sensor data in frequency domain F representation: The resulting noisy adversarial image *x^{adv}* is converted to the discrete cosine transform representation and reshaped such that different frequencies are sorted channel-wise. This is done by splitting the input image into (preferably) 8x8 blocks, and applying the DCT transformation on each block independently, resulting (preferably) in 64 DCT coefficients for each 8x8 block of the HxWx3 RGB image. These (preferable) 64 coefficients correspond to weightage of 64 base cosine-frequencies that are present in the original 8x8 RGB block images. The resulting image has dimensions of HxWx3 with each pixel indicating corresponding real-valued DCT coefficients. Next, preferably these DCT coefficients are rearranged such that the same frequencies are all in one channel. The resulting image after this reshaping is therefore of resolution H/8xW/8x192. The 192 channels correspond to 64 frequencies x 3 channels = 192 total channels.
      3) Channel Selection (see reference sign 36): Preferably, two ways of channel selection can be performed such that the resulting image is of resolution H/8xW/8xC, where C is usually 24/48/64 depending on the selection method used.
      3 (a) Dynamic Selection: This approach is a learnt approach to find a subset of the most important frequency channels from a given input image. First, an input DCT transformed image (say of dimension HxWxC) is converted to dimensions 1x1xC by sequentially applying average pooling and 1x1 convolution operation. Thereafter each entry x_i, where i is the channel index ranging from 1 to C are multiplied by two trainable parameters (p1 and p2) to output a tensor of dimension 1x1xCx2. These parameters are normalized to obtain probability values of selecting an individual channel. Thereafter, using a Bernoulli distribution, these parameters p1 and p2 are used as input to output discrete values 0 or 1, thereby being referred to as a gate that is either open (value 1) or close (value 0). This gate can be represented by F(x_i). The gate tensor F(.) is used as an element-wise multiplication operation to the input DCT image (HxWxC) to get a filtered subset (HxWxc) where c ≤ C. Here the c depends on the number of 0 entries in the gating tensor F(x). In order to obtain the parameters p1 and p2, the AE is trained on a modified loss as mentioned below in Step 1: (6).
         Essentially, the entire dynamic selection methodology aims at learning parameters that maximize removal of channels from an input image, such that these channels contribute least to the overall training objective, which in this case is about denoising an input image. Hence, if this is an attacked image, the dynamic selection methods basically removes channels corresponding to the adversarial perturbations (which are most likely high-frequency noise).
      3 (b) Static Selection: This step directly filters out a subset of the highest frequencies, by converting them to 0.
      4) Forward pass to Autoencoder (AE): The resulting compressed representation is fed into the auto-encoder architecture which outputs a correspondingly denoised output image in the DCT representation of the same shape H/8xW/8xC. This is then padded with additional 0's such that the image results in H/8xW/8x192.
      5) IDCT: An inverse discrete cosine transform is used to convert the denoised DCT coefficients back to the original RGB spatial image x' of resolution HxWx3 (whereas the sensor data are in spatial domain S representation again). This is the final output of the defense module which can be sent to the target DNN for inference (performed by the target perception unit 40).
      6) Loss of Autoencoder: In order to train the Autoencoder, the standard reconstruction loss using the mean squared error between a clean x and a denoised image x' is used. Additionally, a penalty loss term is also added using a weighted parameter lambda that minimizes the number of channels needed, and hence maximum compression of the input image. The parameters of the auto-encoder including p1 and p2 are trained together using this loss with a combination of both clean and attacked images, such that it learns to deal with both attacked and non-attacked images in an efficient manner.
Step 2: Inference of Autoencoder (AE):
   Once the Autoencoder is trained, during inference, an input image preferably undergoes the following operations: RGB -> addition of random noise r -> DCT conversion -> Dynamic channel selection (using the learnt parameters p1 and p2) -> AE reconstruction -> IDCT -> Target DNN. This works the same for both clean and attacked images.

The applicant reserves his right to claim all features disclosed in the application document as being an essential feature of the invention, as long as they are new, individually or in combination, in view of the prior art. Furthermore, it is noted that in the figures features are described, which can be advantageous individually. Someone skilled in the art will directly recognize that a specific feature being disclosed in a figure can be advantageous also without the adoption of further features from this figure. Furthermore, someone skilled in the art will recognize that advantages can evolve from a combination of diverse features being disclosed in one or various figures.

### List of reference symbols

- 1: Vehicle
- 10: Processing unit
- 14: Control unit
- 30: Defense unit
- 32: Boundary of the region of interest
- 34: DCT
- 36: Channel selection
- 38: Autoencoder
- 39: IDCT
- 40: Target perception unit
- DCT: Discrete Cosine Transformation
- DI: Denoised image
- FFT: Fast Fourier Transformation
- F: Frequency domain
- I: Input image
- IDCT: Inverse Discrete Cosine Transformation
- L: Reconstruction Loss
- r: Random noise
- S: Spatial domain
- SI: Segmentation mask

## Claims

1. Method for automatically executing a vehicle function of a, in particular at least partially autonomously controlled, vehicle (1) based on spatially resolved raw sensor data (I) for environment perception generated by at least one sensor device (22, 24, 26) for environment detection of the vehicle (1), including:
- receiving spatially resolved raw sensor data generated by the at least one sensor device (22, 24, 26) of the vehicle (1);
- processing sensor data which are characteristic for the spatially resolved raw sensor data (I) by a defense unit (30), the defense unit (30) determining at least one adversarial perturbation parameter being characteristic for an adversarial perturbation of the sensor data, wherein for the determination of the adversarial perturbation parameter the sensor data are transformed from a spatial domain representation (*x^{adv}*) into a frequency domain representation (*X^{adv}*);
- preferably, determining defense output sensor data in dependence of the at least one adversarial perturbation parameter, in particular by at least reducing and/or removing the at least one adversarial perturbation;
- executing the vehicle function based on the at least one adversarial perturbation parameter, in particular based on the defense output sensor data.

2. Method according to claim 1, wherein the sensor data are transformed to a Discrete Cosine Transform (DCT) representation and/or a Fast Fourier Transform (FFT) representation.

3. Method according to one of the preceding claims, wherein the method includes accessing a, in particular trained machine-learning, denoising model for performing at least one computer-implemented denoising operation on the sensor data in the frequency domain, wherein in particular the denoising model includes a set of parameters set to values learned as a result of a training process in the frequency domain.

4. Method according to the preceding claim, wherein for the denoising operation, an autoencoder and/or a GAN and/or a variational autoencoder is used.

5. Method according to one of the preceding claims, wherein the sensor data are processed via at least one computer-implemented random pre-processing method step, in particular prior to being transformed into frequency domain.

6. Method according to the preceding claim, wherein the random pre-processing method step includes an addition of random noise at least to parts of the sensor data.

7. Method according to one of the preceding claims, including a computer-implemented method step in which at least one channel parameter is determined based on the sensor data in frequency domain representation (*X^{adv}*) and in which a subset of sensor data is determined and/or selected based on the at least one channel parameter, wherein the adversarial perturbation parameter is determined based on the determined and/or selected subset of sensor data.

8. Method according to the preceding claim, wherein the channel parameter is determined in a dynamic way including accessing a trained machine-learning channel selection model for selecting at least one channel being characteristic for components of the sensor data of same frequency, wherein the channel selection model includes a set of parameters set to values learned as a result of a training process, in particular in the frequency domain.

9. Method according to claim 7, wherein the channel parameter is determined in a static way.

10. Method according to one of the preceding claims, wherein the sensor data are compressed via at least one computer-implemented compression method step, in particular prior to being transformed into frequency domain.

11. Defense unit (30) for a vehicle (1) for adversarial defense against and/or detection of adversarial attacks on spatially resolved raw sensor data (I) for environment perception generated by at least one sensor device (22, 24, 26) for environment detection of the vehicle (1), wherein the defense unit (30) is configured to receive sensor data which are characteristic for the spatially resolved raw sensor data (I), **characterized in that** the defense unit (30) is configured to process the sensor data, hereby determining at least one adversarial perturbation parameter being characteristic for an adversarial perturbation of the sensor data, wherein for the determination of the adversarial perturbation parameter the sensor data are transformed from a spatial domain representation (*x^{adv}*) into a frequency domain representation (*X^{adv}*)*.*

12. Vehicle (1), in particular motor vehicle and/or designed for autonomous or partially autonomous controlled driving, comprising a defense unit (30) according to the preceding claim.

13. A Computer-implemented method for using artificial intelligence for adversarial defense against and/or detection of adversarial attacks on spatially resolved raw sensor data (I) for environment perception generated by at least one sensor device (22, 24, 26) for environment detection of a vehicle (1), including
- generating a training dataset of spatially resolved training sensor data capturing a vehicle environment, wherein the spatially resolved training sensor data are in spatial domain representation;
- training, based on the training dataset, a machine learning denoising model that includes a set of trainable parameters wherein the machine learning denoising model is configured for determining based on the training sensor data at least one adversarial perturbation parameter being characteristic for an adversarial perturbation of the training sensor data, wherein for the determination of the adversarial perturbation parameter the training sensor data are transformed from a spatial domain representation (*x^{adv}*) into a frequency domain representation (*X^{adv}*).

14. Method according to the preceding claim, wherein the training sensor data are processed via at least one computer-implemented random pre-processing method step, in particular prior to being transformed into frequency domain.

15. Method according to one of the two preceding claims, wherein the machine-learning denoising model is configured for determining at least one channel parameter being characteristic for components of the training sensor data of same frequency, wherein the at least one adversarial perturbation parameter depends on the at least one channel parameter.
